# FASCICULE DE BREVET EUROPEEN

(11) **EP 4 684 082 B1**
(45) Date de publication et mention de la délivrance du brevet: **07.10.2026**
(21) Numéro de dépôt: 24707799.3
(22) Date de dépôt: 01.03.2024
(51) Int. Cl.: E05C 17/32

(54) **BIELLE PLIABLE COURBE A DEUX SEGMENTS**
ZWEI-SEGMENT-GEBOGENE FALTBARES PLEUELSTANGE
TWO-SEGMENT CURVED FOLDING CONNECTING ROD

(30) Priorité: 23.03.2023 BE 202305226
(43) Date de publication de la demande: 28.01.2026
(73) Titulaire: Technical AIrborne Components Industries, 4041 Herstal (BE)
(72) Inventeur: CHENOUX, Mathieu, 67000 ARLON (BE)
(74) Mandataire: Junca, Eric
(86) Numéro de dépôt international: PCT/EP2024/055343
(87) Numéro de publication internationale: WO 2024/193979

(56) Documents cités:
- DE-C- 202 213
- FR-A- 383 703
- KR-U- 19980 013 689
- US-A- 1 136 444
- US-A- 3 357 729
- US-A- 3 563 592
- US-A1- 2013 214 103

## Description

### DOMAINE TECHNIQUE

L'invention se rapporte à un système à bielle pliable à deux segments, l'un de ces segments étant courbe. Une telle bielle peut être utilisée notamment pour des ouvrants comme bielle de maintien en ouverture lorsqu'elle est dépliée et comme bielle de rangement lorsqu'elle est repliée.

Dans le domaine aéronautique en particulier, les capots et les trappes sont des pièces mobiles ouvrantes de la structure externe d'un aéronef qui permettent, lorsqu'ils sont ouverts, d'accéder à des éléments ou équipements - train d'atterrissage, moteur - de la structure interne pour des opérations d'inspection et/ou de maintenance. Pour mener à bien ces opérations, ces capots et trappes sont accrochés à des bielles qui permettent de maintenir l'ouverture et d'éviter une fermeture inopinée du capot ou de la trappe. Pour la fermeture des capots et des trappes, les bielles sont repliées et accompagnent la cinématique de fermeture des ouvrants.

De telles bielles peuvent être utilisées dans tout autre domaine ayant recours à des bielles de maintien en ouverture tel que le domaine de l'automobile, naval ou de la construction en particulier.

### ÉTAT DE LA TECHNIQUE

De manière générale, une bielle est une pièce rectiligne de connexion entre deux autres pièces mobiles l'une par rapport à l'autre, la bielle permettant de transmettre et/ou de bloquer un mouvement de déplacement d'une de ces pièces. Dans le cas des bielles pour ouvrants, celles-ci ont pour fonction de bloquer l'ouvrant lorsqu'il a atteint l'ouverture recherchée.

Des bielles simples sont couramment utilisées dans l'industrie automobile. Elles se déploient et s'accrochent en général au capot d'un véhicule pour le maintenir ouvert. Ces bielles présentent l'inconvénient d'être à la dimension de l'ouverture recherchée pour le capot. L'encombrement de ces bielles est donc directement fonction de l'ouverture recherchée du capot et si cette ouverture recherchée est de dimension plus grande que la dimension de l'ouvrant, il est problématique de ranger la bielle lorsque l'ouvrant est fermé.

Pour diminuer l'encombrement de ces bielles simples, des bielles télescopiques sont utilisées. Celles-ci comportent plusieurs segments qui s'emboitent et glissent les uns dans les autres pour augmenter ou diminuer la taille de la bielle télescopique. Cependant, ces bielles télescopiques sont composées de segments creux pour permettre leur emboitement et ces segments creux présentent une rigidité structurelle moindre par rapport à des segments pleins. Les bielles télescopiques sont donc limitées à des charges faibles. De plus, le coût ainsi que les durées d'assemblage plus élevés de telles bielles télescopiques réduisent leur intérêt.

Des bielles de type bielles pliables permettent de diminuer l'encombrement longitudinal des bielles simples. L'encombrement longitudinal des bielles pliables à deux segments dépend directement de l'angle de repli entre ces segments : plus l'angle de repli est proche de 90°, plus l'encombrement longitudinal est réduit. Cependant, cette réduction de l'encombrement longitudinal s'accompagne d'une augmentation de l'encombrement transversal.

Des bielles pliables à trois segments sont plus communément utilisées : elles présentent une double articulation bloquée par un coulisseau lorsque la bielle est dépliée. Cette double articulation étant localisée sur une zone médiane entre les extrémités de la bielle, la bielle repliée présente un encombrement longitudinal et transversal minime. Cependant, le mécanisme de double articulation ainsi que la cinématique du coulisseau de blocage rendent fragile la bielle pliable à trois segments. En cas d'endommagement de celle-ci, le fonctionnement de l'ouvrant est alors compromis.

Un système à bielle pliable à deux segments, conforme au préambule de la revendication 1, est divulgué dans le document US3563592A.

### EXPOSE DE L'INVENTION

Afin de remédier aux inconvénients de l'état de la technique exposés ci-dessus, l'invention a pour objectif principal d'améliorer l'encombrement des bielles pliables à deux segments sans générer la fragilité inhérente aux bielles à trois segments.

Pour ce faire, l'invention prévoit de réaliser une bielle pliable à deux segments dont un segment courbe et qui comporte également un mécanisme de verrouillage à la jonction entre les deux segments. Avantageusement, ce mécanisme permet un verrouillage spontané des segments par une force de rappel lorsque la bielle se déplie. De plus, le déverrouillage du mécanisme est opéré sans intervention d'outillage particulier.

Plus précisément, la présente invention a pour objet un système à bielle pliable à deux segments en liaison entre un encadrement et un ouvrant. Chaque segment, un segment dit de verrouillage et un segment dit libre, présente une extrémité d'attache et une extrémité d'articulation, les deux segments étant reliés entre eux en leur extrémité d'articulation par un axe de rotation. Les extrémités d'attache des segments réalisent la liaison entre la bielle pliable et l'encadrement ainsi qu'entre la bielle pliable et l'ouvrant.

Le segment de verrouillage est rectiligne et comporte dans une zone médiane un moyen de blocage d'un moyen de rappel, alors que le segment libre comporte une portion rectiligne s'étendant à partir de son extrémité d'articulation. Un coulisseau de verrouillage est apte à glisser le long du segment de verrouillage et de la portion rectiligne du segment libre entre une position de déverrouillage et une position de verrouillage, le moyen de rappel positionnant le coulisseau de verrouillage en position de verrouillage. En position de déverrouillage, le coulisseau de verrouillage est porté en totalité par le segment de verrouillage et, en position de verrouillage, le coulisseau de verrouillage couvre les extrémités d'articulation.

Plus particulièrement, le segment libre comporte une portion courbe en continuité de la portion rectiligne, cette portion courbe réalisant un arrêt du coulisseau de verrouillage en position de verrouillage et permettant un encombrement minimal du segment libre.

Avantageusement, le segment libre courbe permet un encombrement minimal lors du repliage de la bielle pendant la fermeture de l'ouvrant. Cette bielle pliable peut ainsi participer au mécanisme d'ouverture/fermeture d'un ouvrant lorsque celui-ci est installé dans un espace réduit. En particulier, les points d'attache de la bielle pliable peuvent être très rapprochés.

Avantageusement également, la portion courbe du segment libre permet le blocage du coulisseau lorsque celui-ci vient position de verrouillage sans usinage du segment libre ni ajout de butée supplémentaire. La bielle pliable de la présente invention est ainsi simplifiée et donc plus rapide à fabriquer et facile à manipuler.

Selon des formes de réalisation préférées prises seules ou en combinaison :
- le moyen de rappel du coulisseau de verrouillage est un ressort de compression ;
- le moyen de blocage du ressort de compression est une butée circulaire agencée sur le segment de verrouillage ;
- la portion rectiligne du segment libre est de dimension inférieure au coulisseau de verrouillage qui recouvre l'axe de rotation en position de verrouillage;
- le segment libre comporte une butée du coulisseau de verrouillage ;
- le segment de verrouillage comporte une mortaise et le segment libre un tenon assemblés par l'axe de rotation ou inversement ;
- le tenon comporte au moins un épaulement ;
- au moins un épaulement comporte une butée de blocage en rotation du segment libre ;
- au moins un épaulement comporte un palier de fin de rotation du segment libre ;
- au moins un épaulement comporte un chanfrein ;
- la mortaise comporte au moins un angle droit contre la butée de blocage en rotation lorsque les segments sont alignés et au moins un angle arrondi qui évite la butée de blocage en rotation ;
- le tenon comporte un coin en butée contre un plat entre des branches de la mortaise en position de verrouillage et un arrondi qui évite le plat.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1, une vue en perspective d'un exemple de système à bielle pliable selon l'invention maintenant une trappe en position fermée ;
- la figure 2, une vue en perspective du système de la figure 1 lorsque la trappe est en position ouverte ;
- la figure 3, une vue éclatée des éléments constitutifs de la bielle pliable des figures précédentes ;
- la figure 4, une vue en coupe de ladite bielle pliable avec le coulisseau en position de verrouillage ;
- la figure 5, une vue latérale de cette bielle pliable avec le coulisseau en position de verrouillage ;
- la figure 6, une vue latérale de la même bielle pliable avec le coulisseau on position de déverrouillage ;
- la figure 7, une vue latérale de ladite bielle pliable dans une première position de repli ;
- la figure 8, une vue latérale de cette bielle pliable dans une seconde position de repli ;
- la figure 9, une vue latérale de la même bielle pliable dans une position finale de repli, et
- la figure 10, une vue en perspective de l'articulation entre les segments de ladite bielle pliable.

### DESCRIPTION DETAILLEE

Sur les figures, des signes de référence identiques renvoient à un même élément ainsi qu'aux passages de la description correspondants.

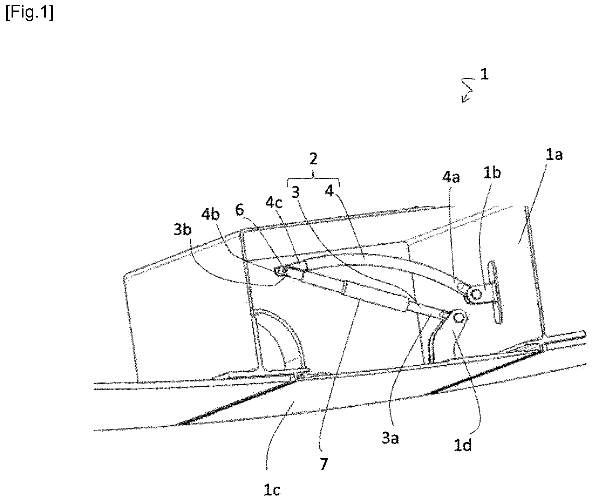

La figure 1 montre une vue en perspective d'un exemple selon l'invention de système 1 à bielle pliable 2 à deux segments en liaison entre un encadrement 1a et un ouvrant 1c, ici une trappe d'accès en position fermée. Chaque segment, un segment dit de verrouillage 3 et un segment dit libre 4, présente une extrémité d'attache 3a, 4a et une extrémité d'articulation 3b, 4b, les deux segments étant reliés entre eux en leur extrémité d'articulation 3b, 4b par un axe de rotation 6. Les extrémités d'attache 3a, 4a, du segment de verrouillage 3 et du segment libre 4 réalisent respectivement la liaison entre la bielle pliable 2 et l'encadrement 1a ainsi qu'entre la bielle pliable 2 et l'ouvrant 1c. Alternativement, les extrémités d'attache 3a, 4a du segment de verrouillage 3 et du segment libre 4 réalisent respectivement la liaison entre la bielle pliable 2 et l'ouvrant 1c ainsi qu'entre la bielle pliable 2 et l'encadrement 1a.

Chaque extrémité d'attache 3a, 4a est montée pivotante dans respectivement un support de fixation 1b de l'encadrement 1a et un support 1d de l'ouvrant 1c, ces liaisons pivotantes permettant à la bielle pliable 2 de se déployer et de se replier en accompagnement de l'ouverture et de la fermeture de l'ouvrant 1c dans son encadrement 1a. Le segment de verrouillage 3 est rectiligne et comporte un coulisseau de verrouillage 7 conçu pour glisser le long de ce segment de verrouillage 3. Le coulisseau de verrouillage 7 est en position dite de déverrouillage et est porté en totalité par le segment de verrouillage 3. Le segment libre 4 comporte quant à lui une portion rectiligne 4c s'étendant à partir de son extrémité d'articulation 4b.

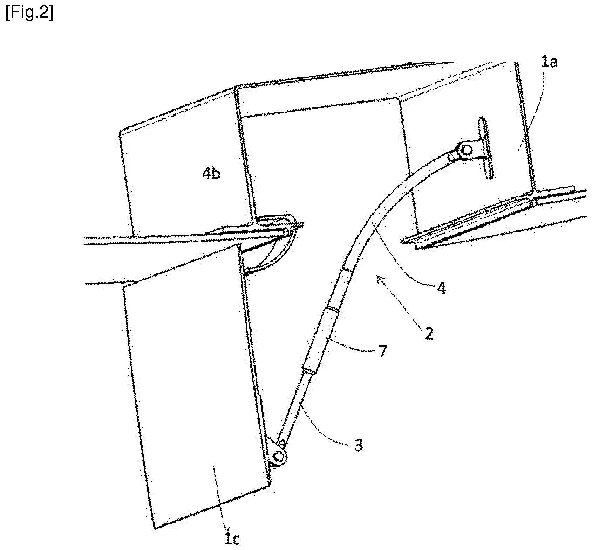

En référence à la figure 2, la bielle pliable 2 est illustrée en liaison entre l'encadrement 1a et l'ouvrant 1c lorsque celui-ci est en position totalement ouverte. Les segments de la bielle pliable 2 sont alors en continuité linéaire l'un par rapport l'autre et le coulisseau de verrouillage 7, en position dite de verrouillage, couvre également la portion rectiligne 4c du segment libre 4, ainsi que les extrémités d'articulation 3b, 4b.

Les extrémités d'articulation 3b, 4b étant couvertes, la bielle pliable 2 est bloquée en configuration déployée et, par conséquent, la trappe est alors maintenue ouverte. La portion rectiligne 4c du segment libre est avantageusement de dimension inférieure au coulisseau de verrouillage 7 qui recouvre l'axe de rotation 6 en position de verrouillage afin de sécuriser ce verrouillage.

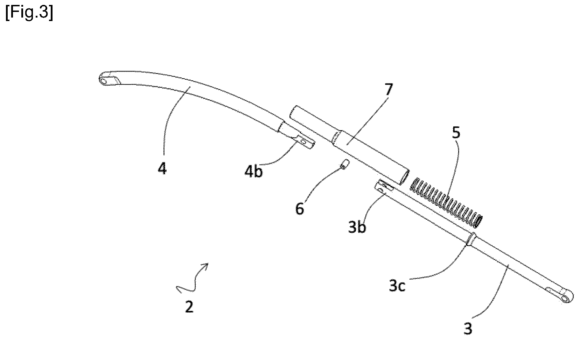

La figure 3 représente une vue éclatée de la bielle pliable 2. Celle-ci est composée du segment de verrouillage 3, du segment libre 4, du coulisseau de verrouillage 7, de l'axe de rotation 6 et d'un ressort de compression 5 comme moyen de rappel du coulisseau de verrouillage 7. Le segment de verrouillage 3 comporte un moyen de blocage du ressort de compression 7 dans une zone médiane entre ses extrémités. Le moyen de blocage est ici une butée circulaire 3c agencée sur le segment de verrouillage 3. Le montage de la bielle pliable 2 s'effectue selon les étapes suivantes :
- positionnement du ressort de compression 5 autour du segment de verrouillage 3 et mise en butée du ressort de compression 5 contre le moyen de blocage ;
- positionnement du coulisseau de verrouillage 7 sur le ressort de compression 5 ;
- traction sur le coulisseau de verrouillage 7 pour compresser le ressort de compression 5 et libérer l'extrémité d'articulation 3b du segment de verrouillage 3 ;
- assemblage des extrémités d'articulation 3b, 4b du segment de verrouillage 3 et du segment libre 4 par l'axe de rotation 6, et
- libération du coulisseau de verrouillage 7.

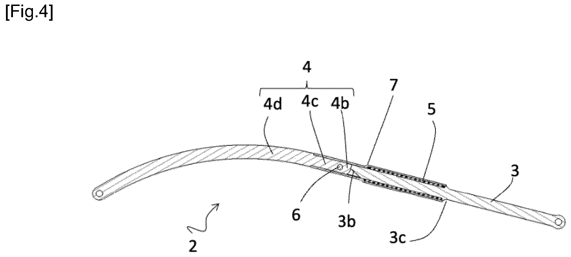

La figure 4 montre une vue en coupe de la bielle pliable 2 dont le coulisseau de verrouillage 7 est en position de verrouillage. Dans cette vue en coupe, le ressort de compression 5 est en butée contre le moyen de blocage du segment de verrouillage 3 et le coulisseau de verrouillage 7 couvre les extrémités d'articulation 3b, 4b du segment de verrouillage 3 et du segment libre 4. La bielle pliable 2 est dite alors en configuration déployée. Le coulisseau de verrouillage 7 est apte à glisser le long du segment de verrouillage 3 et de la portion rectiligne 4c du segment libre 4, entre la position de déverrouillage et la position de verrouillage, le ressort de compression 5 positionnant alors le coulisseau de verrouillage 7 en position de verrouillage. De plus, le segment libre 4 comporte une portion courbe 4d en continuité de la portion rectiligne 4c, cette portion courbe 4d réalisant un arrêt du coulisseau de verrouillage 7 en position de verrouillage et permettant un encombrement minimal du segment libre 4. Alternativement, l'arrêt du coulisseau de verrouillage en position de verrouillage peut être réalisé au moyen d'un circlip ou d'un anneau d'arrêt installé sur le coulisseau de verrouillage et venant en appui sur la butée circulaire. Ainsi, le coulisseau de verrouillage est maintenu en position de verrouillage et ce même en l'absence de butée d'arrêt sur le segment libre.

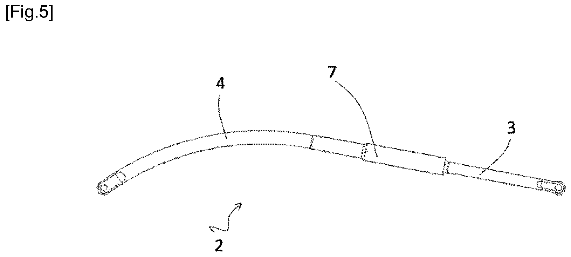

La vue latérale de la figure 5 représente la bielle pliable 2 en configuration déployée. Dans cette configuration, illustrée également en figure 2, le coulisseau de verrouillage 7 est en position de verrouillage et empêche la bielle pliable 2 de se replier en bloquant les extrémités d'articulation, celles-ci ne pouvant plus pivoter autour de l'axe de rotation.

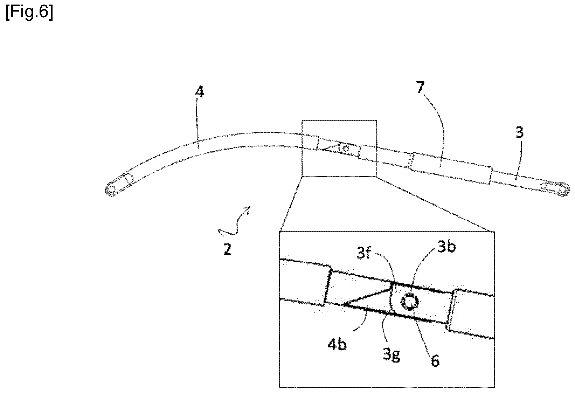

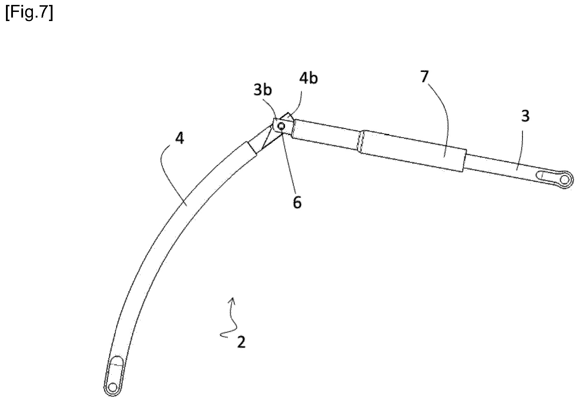

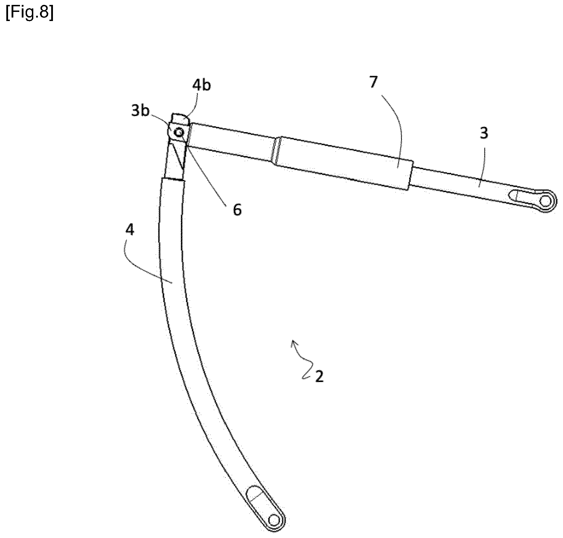

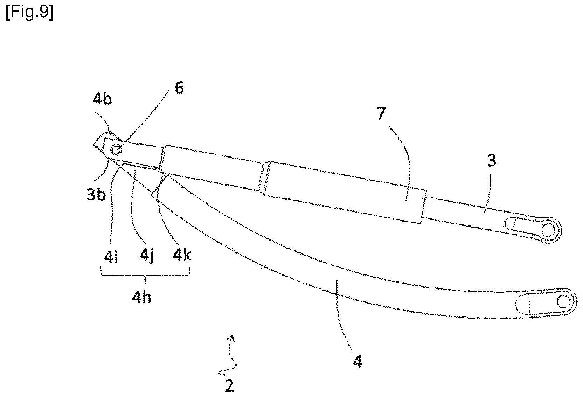

Les figures 6 à 9 illustrent les différentes étapes de repliage de la bielle pliable 2. En figure 6, un opérateur tire sur le coulisseau de verrouillage 7 pour l'amener en position de déverrouillage qui libère ainsi les extrémités d'articulation 4b, 3b des segments libre 4 et de verrouillage 3. Les segments peuvent alors pivoter l'un par rapport à l'autre autour de l'axe de rotation 6, comme représenté en figure 7 et en figure 8 qui montrent différents angles de repli de la bielle pliable 2. En figure 9, la bielle pliable 2 est replié à son maximum et occupe alors un encombrement minimal.

Le déploiement et verrouillage de la bielle pliable 2 est illustré en considérant les figures 9 à 5 à rebours. La bielle pliable 2 étant initialement repliée (figure 9), le segment libre 4 et le segment de verrouillage 3 pivotent l'un par rapport à l'autre lorsque la trappe s'ouvre (figure 8 et figure 7) jusqu'à s'aligner (figure 6). Puis le ressort de compression 5 positionne le coulisseau de verrouillage 7 en position de verrouillage (figure 5).

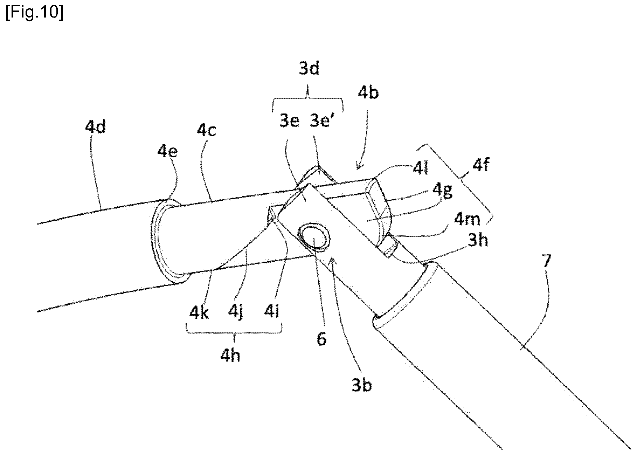

La figure 10 montre une vue en perspective des extrémités d'articulation 4b, 3b du segment libre 4 et du segment de verrouillage 3. En particulier, la portion rectiligne 4c et la portion courbe 4d du segment libre 4 présentent des diamètres différents. La portion courbe 4d étant de diamètre supérieur, elle réalise une butée 4e du coulisseau de verrouillage 7 lorsque celui-ci vient le long de la portion rectiligne 4c en position de verrouillage.

De plus, l'assemblage du segment libre 4 et du segment de verrouillage 3 est de type tenon-mortaise dans lequel le segment de verrouillage 3 comporte la mortaise 3d et le segment libre 4 le tenon 4f, la mortaise 3d et le tenon 4f étant assemblés en pivotement autour de l'axe de rotation 6. Alternativement, le segment de verrouillage 3 peut comporter le tenon et le segment libre 4 la mortaise ou chaque segment peut comporter une mortaise asymétrique. Le tenon 4f comporte deux faces opposées 4g et la mortaise 3d deux branches identiques 3e, 3e'.

Le tenon 4f sur le segment libre 4 comporte un épaulement 4h sur chaque face 4g, chaque épaulement présentant une butée de blocage en rotation 4i du segment libre 4 et un palier 4j de fin de rotation du segment libre 4. Le fonctionnement de la butée de blocage en rotation 4i est détaillé ci-après en référence à la figure 6 et à la figure 7.

Chaque branche 3e, 3e' de la mortaise 3d comporte un angle droit 3f contre la butée de blocage en rotation 4i lorsque les segments sont alignés (figure 6). Cet angle droit 3f contribue à empêcher la rotation anti-horaire du segment de verrouillage 3 autour de l'axe de rotation 6. Les branches 3e, 3e' de la mortaise 3d comportent également un bord arrondi 3g qui évite la butée de blocage en rotation 4i et qui permet la rotation horaire du segment de verrouillage 3 autour de l'axe de rotation 6 (figure 7). La combinaison de la butée de blocage en rotation 4i et de la géométrie de la mortaise 3d permettent de s'assurer que les segments ne pivotent entre eux que selon la cinématique de repliage prédéterminée.

Le palier 4j de fin de rotation du segment libre 4 réalise un plat au contact de la mortaise 3d et définit la position de repli maximal de la bielle pliable 2. Comme illustré en figure 9, lorsque la bielle pliable 2 est repliée et la trappe d'accès est fermée, la bielle pliable 2 n'atteint pas cette position de repli maximal et un jeu subsiste entre le palier 4j et la mortaise 3d. En effet, la fermeture de la trappe d'accès limite la position de repli final de la bielle pliable 2. De plus, chaque épaulement 4h comporte également un chanfrein 4k en extrémité du pallier 4j de fin de rotation du segment libre 4. Ce chanfrein 4k est en contact avec le coulisseau de verrouillage 7 comme illustré également en figure 9 et permet de minimiser l'endommagement du coulisseau de verrouillage 7 lors des déploiements et repliages successifs de la bielle pliable 2.

Le tenon 4f comporte également un coin 4l et un arrondi 4m, le coin 4l venant en butée contre le plat 3h entre les branches 3e, 3e' de la mortaise 3d en position de verrouillage. Pendant le repliage de la bielle pliable 2, le coin 4l empêche la rotation horaire du segment libre 3 autour de l'axe de rotation 6, la rotation anti-horaire et donc le repliage de la bielle pliable 2 étant permis par l'arrondi 4m du tenon 4f qui évite le plat 3h. Cet arrondi 4m permet également un glissement du coulisseau 7 sur le tenon 4f qui facilite avantageusement le repliage et le déploiement de la bielle pliable 2 en limitant les frottements entre le coulisseau 7 et le tenon 4f.

L'invention n'est pas limitée aux exemples décrits et représentés. Il est possible d'envisager d'autres moyens de rappel, tel qu'un vérin à gaz ou des bandes élastiques. De plus, tout moyen de blocage du moyen de rappel peut être incorporé au mécanisme : dans le cas d'un ressort de compression, une tige, traversante ou non, ou tout type de butée non circulaire est capable de bloquer le ressort de compression. Dans le cas d'un vérin à gaz, tout moyen de solidarisation (fixation, soudure, collage, etc.) réalise un moyen de blocage.

## Revendications

1. Système (1) à bielle pliable (2) à deux segments en liaison entre un encadrement (1a) et un ouvrant (1c) dont :
- chaque segment, un segment dit de verrouillage (3) et un segment dit libre (4) présente une extrémité d'attache (3a, 4a) et une extrémité d'articulation (3b, 4b), les deux segments étant reliés entre eux en leur extrémité d'articulation (3b, 4b) par un axe de rotation (6), les extrémités d'attache (3a, 4a) réalisant la liaison entre la bielle pliable (2) et l'encadrement (1a) ainsi qu'entre la bielle pliable (2) et l'ouvrant (1c) ;
- le segment de verrouillage (3) est rectiligne et comporte dans une zone médiane un moyen de blocage d'un moyen de rappel ;
- le segment libre (4) comporte une portion rectiligne (4c) s'étendant à partir de son extrémité d'articulation (4b) ;
- un coulisseau de verrouillage (7) apte à glisser le long du segment de verrouillage (3) et de la portion rectiligne (4c) du segment libre (4) entre une position de déverrouillage dans laquelle le coulisseau de verrouillage (7) est porté en totalité par le segment de verrouillage (3) et une position de verrouillage dans laquelle le coulisseau de verrouillage (7) couvre les extrémités d'articulation (3b, 4b), le moyen de rappel positionnant le coulisseau de verrouillage (7) en position de verrouillage ;
- le segment libre (4) comporte une portion courbe (4d) en continuité de la portion rectiligne (4c), le système à bielle pliable étant **caractérisé en ce que** cette portion courbe (4d) réalise un arrêt du coulisseau de verrouillage (7) en position de verrouillage et permet un encombrement minimal du segment libre (4).

2. Système (1) selon la revendication 1, dans lequel le moyen de rappel du coulisseau de verrouillage (7) est un ressort de compression (5).

3. Système (1) selon la revendication 2, dans lequel le moyen de blocage du ressort de compression (5) est une butée circulaire (3c) agencée sur le segment de verrouillage (3).

4. Système (1) selon l'une quelconque de la revendication 1 à la revendication 3, dans lequel la portion rectiligne (4c) du segment libre (4) est de dimension inférieure au coulisseau de verrouillage (7) qui recouvre l'axe de rotation (6) en position de verrouillage.

5. Système (1) selon l'une quelconque de la revendication 1 à la revendication 4, dans lequel le segment libre (4) comporte une butée (4e) du coulisseau de verrouillage (7).

6. Système (1) selon l'une quelconque de la revendication 1 à la revendication 5, dans lequel le segment de verrouillage (3) comporte une mortaise (3d) et le segment libre (4) un tenon (4f) assemblés par l'axe de rotation (6) ou inversement.

7. Système (1) selon la revendication 6, dans lequel le tenon (4f) comporte au moins un épaulement (4h).

8. Système (1) selon la revendication 7, dans lequel au moins un épaulement (4h) comporte une butée de blocage en rotation (4i) du segment libre (4).

9. Système (1) selon l'une quelconque de la revendication 7 à la revendication 8, dans lequel au moins un épaulement (4h) comporte un palier (4j) de fin de rotation du segment libre (4).

10. Système (1) selon l'une quelconque de la revendication 7 à la revendication 9, dans lequel au moins un épaulement (4h) comporte un chanfrein (4k).

11. Système (1) selon l'une quelconque de la revendication 6 à la revendication 10 en combinaison avec la revendication 8, dans lequel la mortaise (3d) comporte au moins un angle droit (3f) contre la butée de blocage en rotation (4i) lorsque les segments sont alignés et au moins un angle arrondi (3g) qui évite la butée de blocage en rotation (4i).

12. Système (1) selon l'une quelconque de la revendication 6 à la revendication 11, dans lequel le tenon (4f) comporte un coin (4l) en butée contre un plat (3h) entre des branches (3e, 3e') de la mortaise (3d) en position de verrouillage et un arrondi (4m) qui évite le plat (3h).

## Patentansprüche

1. System (1) mit einer biegbaren Stange (2) mit zwei in Verbindung stehenden Segmenten zwischen einem Rahmen (1a) und einem Öffnungselement (1c), wobei:
- jedes Segment, ein Verriegelungssegment (3) genanntes Segment und ein freies Segment (4) genanntes Segment, ein Befestigungsende (3a, 4a) und ein Gelenkende (3b, 4b) aufweist, wobei die zwei Segmente an ihrem Gelenkende (3b, 4b) durch eine Drehachse (6) miteinander verbunden sind, wobei die Befestigungsenden (3a, 4a) die Verbindung zwischen der biegbaren Stange (2) und dem Rahmen (1a) sowie zwischen der biegbaren Stange (2) und dem Öffnungselement (1c) herstellen;
- das Verriegelungssegment (3) gerade ist und in einem mittleren Bereich ein Blockiermittel eines Rückstellmittels umfasst;
- das freie Segment (4) einen geraden Abschnitt (4c) umfasst, der sich von seinem Gelenkende (4b) aus erstreckt;
- ein Verriegelungsgleitstück (7), das in der Lage ist, entlang des Verriegelungssegments (3) und des geraden Abschnitts (4c) des freien Segments (4) zwischen einer Entriegelungsposition, in der das Verriegelungsgleitstück (7) vollständig von dem Verriegelungssegment (3) getragen wird, und einer Verriegelungsposition, in der das Verriegelungsgleitstück (7) die Gelenkenden (3b, 4b) bedeckt, zu gleiten, wobei das Rückstellmittel das Verriegelungsgleitstück (7) in der Verriegelungsposition positioniert;
- das freie Segment (4) einen gekrümmten Abschnitt (4d) umfasst, der in den geraden Abschnitt (4c) übergeht, wobei das System mit einer biegbaren Stange **dadurch gekennzeichnet ist, dass** dieser gekrümmte Abschnitt (4d) ein Anhalten des Verriegelungsgleitstücks (7) in der Verriegelungsposition bewirkt und einen minimalen Raumbedarf des freien Segments (4) ermöglicht.

2. System (1) nach Anspruch 1, wobei das Rückstellmittel des Verriegelungsgleitstücks (7) eine Druckfeder (5) ist.

3. System (1) nach Anspruch 2, wobei das Blockiermittel der Druckfeder (5) ein kreisförmiger Anschlag (3c) ist, der auf dem Verriegelungssegment (3) angeordnet ist.

4. System (1) nach einem der Ansprüche 1 bis 3, wobei der gerade Abschnitt (4c) des freien Segments (4) eine geringere Größe als das Verriegelungsgleitstück (7) hat, das die Drehachse (6) in der Verriegelungsposition bedeckt.

5. System (1) nach einem der Ansprüche 1 bis 4, wobei das freie Segment (4) einen Anschlag (4e) des Verriegelungsgleitstücks (7) umfasst.

6. System (1) nach einem der Ansprüche 1 bis 5, wobei das Verriegelungssegment (3) ein Zapfenloch (3d) und das freie Segment (4) einen Zapfen (4f) umfasst, die durch die Drehachse (6) zusammengebaut sind, oder umgekehrt.

7. System (1) nach Anspruch 6, wobei der Zapfen (4f) mindestens einen Ansatz (4h) umfasst.

8. System (1) nach Anspruch 7, wobei mindestens ein Ansatz (4h) einen Anschlag zur Sperrung der Drehung (4i) des freien Segments (4) umfasst.

9. System (1) nach einem der Ansprüche 7 bis 8, wobei mindestens ein Ansatz (4h) ein Lager (4j) für das Ende der Drehung des freien Segments (4) umfasst.

10. System (1) nach einem der Ansprüche 7 bis 9, wobei mindestens ein Ansatz (4h) eine Fase (4k) umfasst.

11. System (1) nach einem der Ansprüche 6 bis 10 in Verbindung mit Anspruch 8, wobei das Zapfenloch (3d) mindestens einen rechten Winkel (3f) bezüglich des Anschlags zur Sperrung der Drehung (4i) aufweist, wenn die Segmente fluchten, und mindestens einen mit einer Rundung versehenen Winkel (3g), der dem Anschlag zur Sperrung der Drehung (4i) ausweicht.

12. System (1) nach einem der Ansprüche 6 bis 11, wobei der Zapfen (4f) eine Ecke (4l) umfasst, die an einer flachen Fläche (3h) zwischen den Schenkeln (3e, 3e') des Zapfenlochs (3d) in der Verriegelungsposition anliegt, und eine Rundung (4m), die der flachen Fläche (3h) ausweicht.

## Claims

1. System (1) with a foldable connecting rod (2) with two segments connecting a frame (1a) and a leaf (1c), wherein:
- each segment, a so-called locking segment (3) and a so-called free segment (4) has an attachment end (3a, 4a) and a hinge end (3b, 4b), the two segments being connected to each other at their hinge end (3b, 4b) by an axis of rotation (6), the attachment ends (3a, 4a) providing the connection between the foldable connecting rod (2) and the frame (1a) as well as between the foldable connecting rod (2) and the leaf (1c);
- the locking segment (3) is rectilinear and comprises in a central area a blocking means of a return means ;
- the free segment (4) comprises a rectilinear portion (4c) extending from its hinge end (4b);
- a locking slider (7) capable of sliding along the locking segment (3) and the rectilinear portion (4c) of the free segment (4) between an unlocking position wherein the locking slider (7) is carried in its entirety by the locking segment (3) and a locking position wherein the locking slider (7) covers the hinge ends (3b, 4b), the return means positioning the locking slider (7) in the locking position;
the free segment (4) comprises a curved portion (4d) in continuity with the rectilinear portion (4c), the foldable connecting rod system being **characterized in that** this curved portion (4d) provides a stop for the locking slider (7) in the locking position and allows a minimum space requirement of the free segment (4).

2. A system (1) according to claim 1, wherein the return means of the locking slider (7) is a compression spring (5).

3. A system (1) according to claim 2, wherein the blocking means of the compression spring (5) is a circular stop (3c) arranged on the locking segment (3).

4. A system (1) according to any one of claims 1 to 3, wherein the rectilinear portion (4c) of the free segment (4) is smaller than the locking slider (7) which covers the axis of rotation (6) in the locking position.

5. A system (1) according to any one of claims 1 to 4, wherein the free segment (4) comprises a stop (4e) of the locking slider (7).

6. A system (1) according to any one of claims 1 to 5, wherein the locking segment (3) comprises a mortise (3d) and the free segment (4) comprises a tenon (4f) joined by the axis of rotation (6) or vice versa.

7. A system (1) according to claim 6, wherein the tenon (4f) comprises at least one shoulder (4h).

8. A system (1) according to claim 7, wherein at least one shoulder (4h) comprises a rotation-blocking stop (4i) of the free segment (4).

9. A system (1) according to any one of claims 7 to 8, wherein at least one shoulder (4h) comprises an end-of-rotation bearing surface (4j) of the free segment (4).

10. A system (1) according to any one of claims 7 to 9, wherein at least one shoulder (4h) comprises a chamfer (4k).

11. A system (1) according to any one of claims 6 to 10 in combination with claim 8, wherein the mortise (3d) comprises at least one right angle (3f) against the rotation-blocking stop (4i) when the segments are aligned and at least one rounded angle (3g) which avoids the rotation-blocking stop (4i).

12. A system (1) according to any one of claims 6 to 11, wherein the tenon (4f) comprises a corner (4l) abutting against a flat (3h) between the branches (3e, 3e') of the mortise (3d) in the locking position and a rounded portion (4m) avoiding the flat (3h).
